# EUROPEAN PATENT APPLICATION

(11) **EP 4 063 645 A1**
(43) Date of publication of application: **28.09.2022**
(21) Application number: 21165118.7
(22) Date of filing: 26.03.2021
(51) Int. Cl.: F03D 7/02, F03D 1/06

(54) **WIND TURBINE COMPRISING A DRAG DEVICE**

(71) Applicant: Siemens Gamesa Renewable Energy A/S, 7330 Brande (DK)
(72) Inventor: Alberts, Johannes Gerhardes Wardjan, 2660 Brøndby Strand (DK); Hoegh, Gustav, 7100 Vejle (DK)
(74) Representative: SGRE-Association

(57) **Abstract**

A wind turbine (1) comprising a tower (2), a nacelle (3) arranged at an upper end of the tower (2), a hub (4) connected to the nacelle (3) and a plurality of blades (5) extending from the hub (4), wherein said wind turbine (1) further comprises a drag device (10) for increasing the drag of the wind turbine (1) in air and/or for increasing the aerodynamic damping, said drag device (10) comprising a planar surface (11) configured to be directed perpendicular to an air flow (34) .

## Description

The present invention relates to a wind turbine comprising a drag device.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator to generate electricity. Hence, the rotational energy of the blades is transferred to the generator, which then converts the mechanical energy into electricity and transfers the electricity to the electrical grid.

There are extended periods of time when the generator is not connected to the electrical grid and cannot therefore transfer the generated energy out of the wind turbine. This is the case during the idling period between the installation and connection to the grid or after the end of life of the wind turbine when the wind turbine is disconnected from the grid and decommissioned.

At these times, the wind turbines do not cease to rotate, as wind continues to move the blades. However, the generator cannot act as a "brake" and convert the mechanical energy into electricity, as the electricity cannot be delivered to the grid. Therefore, the wind turbine is operated in idle mode and no electricity is produced. However, the fatigue of the wind turbine components increases at idle mode operation due to the increased accumulated energy in the wind turbine.

During the idle mode of the wind turbines, the amount of energy produced due to the rotation of the wind turbines is reduced as much as possible to minimize the fatigue of the components. For example, the nacelle is rotated to a specific yaw angle and/or the blades are rotated to a specific pitch angle to minimize the wind turbine load. This method is known from the prior art, as disclosed for example in EP 2 631 470 A1.

Additionally, during the normal operation of the wind turbine, oscillations of the upper part of the wind turbine greatly increase the fatigue of the tower and of the foundation. Due to the aerodynamic design of the wind turbine, which allows the streamlines of the wind to flow over and around the wind turbine, the aerodynamic damping of the wind turbine in case of oscillations of the nacelle and the tower is very low. This results in the wind turbine not being able to prevent oscillations from occurring indefinitely, which can result in damages of the tower and of the foundation caused by fatigue.

The current development of the technology of wind turbines tends to an increased size of wind turbines for harvesting more wind energy, with longer blades and higher towers. Due to the increasing size of wind turbines and the higher loads generated by the wind turbines, the fatigue loading under idling conditions of the wind turbine components has greatly increased, as well as the oscillations of the wind turbine during operation. The methods known from the prior art to minimize the fatigue of the wind turbine components for extended periods of time do not suffice to avoid a damage of the wind turbine caused by the increased fatigue loading due to the low structural damping of the wind turbine.

A further solution to minimize the fatigue of the components and avoid a damage in the wind turbine is to increase the amount of steel and thereby strengthen the tower and the foundation so that these components can withstand the fatigue during idling. This solution is however costly due to the additional material needed and it may not be suitable for the new generation wind turbines due to the already increased weight of the turbines, which would further increase through the addition of material.

It is an object of the invention to provide a solution for wind turbines to decrease the fatigue of the wind turbine that overcomes the problems described above.

This is achieved by a wind turbine comprising a drag device according to claim 1.

A wind turbine according to the invention comprises a tower, a nacelle arranged at an upper end of the tower, a hub connected to the nacelle and a plurality of blades extending from the hub.

The wind turbine according to the invention further comprises a drag device for increasing the drag of the wind turbine in air and/or for increasing the aerodynamic damping, said drag device comprising a planar surface configured to be directed perpendicular to the air flow.

The wind turbine is a horizontal axis wind turbine, which means that the axis of rotation of the wind turbine is parallel to the ground. This kind of wind turbine uses the aerodynamic lift of the rotor blades to generate the rotational movement. For an efficient performance and generation of electricity, the horizontal axis wind turbines are designed to minimize the drag force, which is the force acting parallel to the flow, while maximizing the lift force, which is the force acting perpendicular to the flow.

However, during idling, the rotation of the wind turbine is not desired. In other words, the lift force acting on the blades is to be reduced as much as possible to reduce the rotational speed of the blades or to stop the blades completely. Until now, this has been achieved by changing the angle of attack of the blades to reduce as much as possible the lift.

A further method according to the invention to reduce the rotational speed of the blades is to increase the drag coefficient of the blades, for example by having a planar surface of the drag device on the blade perpendicular to the air flow, which greatly increases the drag coefficient of the blade structure. The air flow will not be able to glide from the leading edge of the airfoil over the upper and/or lower surface of the airfoil of the blade, as it will hit the planar surface, resulting in separations in the laminar flow and turbulence, which results in either a minimal lifting force or no lifting force at all. Hence, the turbine will not rotate or will rotate with a very low rotational speed.

According to a preferred embodiment of the invention, the drag device further comprises a frame, which gives structural stability to the drag device. The frame surrounds the planar surface and further helps to tighten the planar surface.

According to another preferred embodiment of the invention, the frame comprises a wire rope. A wire rope comprises several strands of metal wire twisted into a helix forming a composite rope. The flexibility of such a wire rope allows to expand the planar surface, for example between the blades or on the nacelle, from a folded state to an expanded state. It also eases the attachment of the frame to the blades, for example by passing the wire rope through the rings on the blades.

According to another preferred embodiment of the invention, the drag device is attached by an attaching means to ensure that the drag device is not detached and/or that the planar surface is tightened to increase the drag coefficient. This feature avoids that the drag device detaches and damages the wind turbine or other objects and improves the safety of the workers. Additionally, a tightened planar surface increases the drag coefficient of the drag device, as more air surface is covered, as well as the ability of the drag device to stop the air flow or to reduce the speed of the air flow.

According to another preferred embodiment of the invention, the attaching means comprises a hook attached to a ring. This is a simple and low-cost alternative for the attaching means. For example, the hook can be attached to the drag device and the ring to the blades for attaching the drag device to the blades.

According to another preferred embodiment of the invention, the attaching means comprises a carabiner attached to a ring. This variant of the attaching mean is safer than a hook, as the carabiner usually comprises a gate member which opens only by pressing or turning it. The gate member can comprise a spring or a similar resilient means to return to the closed position if no pressure is applied to the gate member. Therefore, the carabiner will stay closed once installed.

According to another preferred embodiment of the invention, the attachment is done by introducing the wire rope of the frame in the ring. For this, the ring can be opened so that the wire rope passes through the inner part of the ring and then closed to lock the wire rope at the inner part of the ring. The planar surface can comprise an opening to allow the ring to close through the opening.

According to another preferred embodiment of the invention, the drag device is attached to the blades by means of a wire around each blade. Since the blade has an increasing diameter from tip to root, by coupling the drag device with a wire around each blade, the drag device will then be fixed to the blades as the increasing diameter of the blades together with the tension of the drag device surface between each blade block the wires from shifting from their position, thereby locking the drag device in its installation position.

According to another preferred embodiment of the invention, the drag device is attached to the nacelle. Such a drag device increases the aerodynamic damping of the wind turbine and reduces the oscillations of the tower, preventing a damage caused by fatigue at the tower and the foundation.

According to another preferred embodiment of the invention, the drag device is attached to the tower, thereby increasing the aerodynamic damping of the wind turbine.

According to another preferred embodiment of the invention, a rotating element is mounted on the tower to allow for yawing of the nacelle when the drag device is attached to the tower. Hence, the drag device is attached to the rotating element of the tower. This rotating element can be a ring or a wire around the tower.

According to another preferred embodiment of the invention, the drag device is arranged in a position between the blades and a rear part of the wind turbine. Hence, the drag device increases the aerodynamic damping of the wind turbine.

According to another preferred embodiment of the invention, the planar surface extends in a direction parallel to the longitudinal axis of the nacelle.

According to another preferred embodiment of the invention, the planar surface extends in a direction perpendicular to the longitudinal axis of the nacelle.
According to another preferred embodiment of the invention, the drag device is attached to at least two blades, wherein the planar surface extends between the two blades. This feature greatly increases the drag coefficient of the blades and considerably reduces the lift force of the wind acting on the blades, as the air flow is stopped by the planar surface of the drag device.

According to another preferred embodiment of the invention, one drag device is arranged between each pair of blades. Hence, the number of drag devices equals the number of blades and each drag device is arranged between two different blades. By having a drag device extending between each blade the forces are balanced over the center of gravity of the rotor, avoiding any torque forces resulting from an increased drag force acting on a specific point in the rotor plane.

According to another preferred embodiment of the invention, the drag device is a sail. Hence, the material of the drag device can also be flexible to be easily folded when the drag device is not needed and to be able to easily expand and tighten the planar surface when the drag device is needed. For example, the drag device can be placed on a single blade in a folded state, for example during manufacturing of the blade, and be expanded at the installation site and attached to the second blade by unfolding the drag device.

According to another preferred embodiment of the invention, the drag device is a kite. The kite can comprise wings, tethers, anchors, a bridle and a tail. The kite can have a single attachment point or multiple attachment points. The length of the tether line can be adjusted. An advantage of using a kite is that it is a cost-effective solution to increase the aerodynamic damping of the wind turbine. A further advantage is that a kite is easily replaceable in case of damage.

The drag device presented here can be used during idling, when no electrical energy is produced. The drag device can also be used during the normal operation of the wind turbine to increase the aerodynamic damping of the wind turbine.

In order to facilitate the understanding of the characteristics of the invention and being an integral part of this specification, some drawing sheets are attached on which figures, with an illustrative but not limiting character, the following is represented:
Figure 1 shows a perspective view of a wind turbine.
Figure 2 shows a wind turbine comprising a drag device in a folded position attached to each blade.
Figure 3 shows a wind turbine comprising a drag device in an extended position arranged between each pair of blades.
Figure 4 shows the attachment of a drag device to a blade by means of a ring and a wire rope.
Figure 5 shows the attachment of a drag device to a blade by means of a ring and a hook.
Figure 6 shows the attachment of a drag device to a blade by means of a ring and a carabiner.
Figure 7 shows a drag device comprising a frame, a planar surface, a carabiner and an opening.
Figure 8 shows a plurality of drag devices attached to the nacelle.
Figure 9 shows a plurality of drag devices attached to the nacelle, wherein some of the drag devices are attached to the tower as well.
Figure 10 shows a top view of a nacelle comprising a plurality of drag devices.
Figures 11 to 13 show the aerodynamic effects of using a drag device on an airfoil.

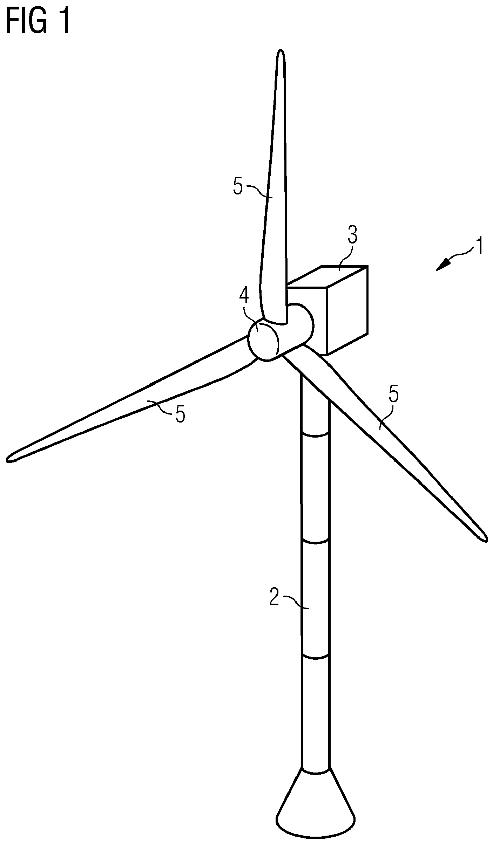

Figure 1 shows a wind turbine 1 comprising a tower 2, a nacelle 3 arranged at an upper end of the tower 2, a hub 4 connected to the nacelle 3 and three blades 5 extending from the hub 4.

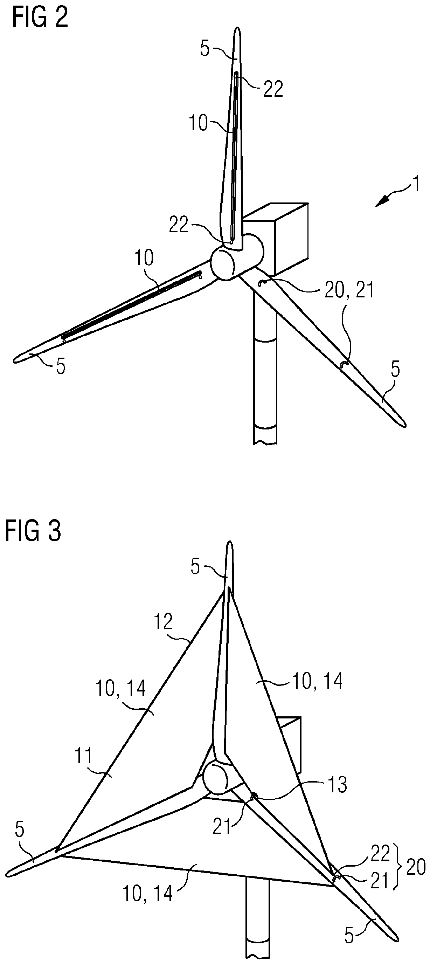

Figure 2 shows the wind turbine 1 of Figure 1, wherein said wind turbine 1 further comprising a drag device 10 attached to one side of each blade 5. The drag device 10 comprises a planar surface 11, which is this figure is in a folded position and can therefore not be seen. The other side of each blade 5 comprises an attaching means 20 in form of rings 21. The attaching means 20 can be used to attach each drag device 10 between a pair of blades 5 when the drag device is unfolded and extended between the blades 5.

Figure 3 shows the wind turbine 1 of Figure 2, wherein the drag devices 10 are in an unfolded and extended position between each pair of blades 5. The drag devices 10 are sails 14 and comprise each a frame 12, a planar surface 11, a hook 22 and an opening 13. From the folded position shown in Figure 2, where the drag devices 10 are attached to one blade 5 each, the drag devices 10 can be extended into an extended or unfolded position and securely attached to the rings 21 of a second blade 5 of the pair of blades 5, thereby extending the planar surface 11 between the blades 5. The frame 12 shown in this figure comprises a wire rope 16, which is secured to a ring 21 of the second blade 5 of the pair of blades 5 by passing the wire rope 16 through the ring 21. For this, the ring 21 can be opened so that the wire rope 16 passes through the inner part of the ring 21 and then closed to lock the wire rope 16 at the inner part of the ring 21. The planar surface 11 comprises an opening 13 to allow the ring 21 to close through the opening 13. A further edge of the frame 12 is secured by means of a hook 22 to another ring 21 of the blade 5. By attaching the drag device 10 to at least two points of the second blade 5, the planar surface 11 can be tightened and wrinkles can be avoided, thereby increasing the effectivity to stop air currents and increasing the drag coefficient.

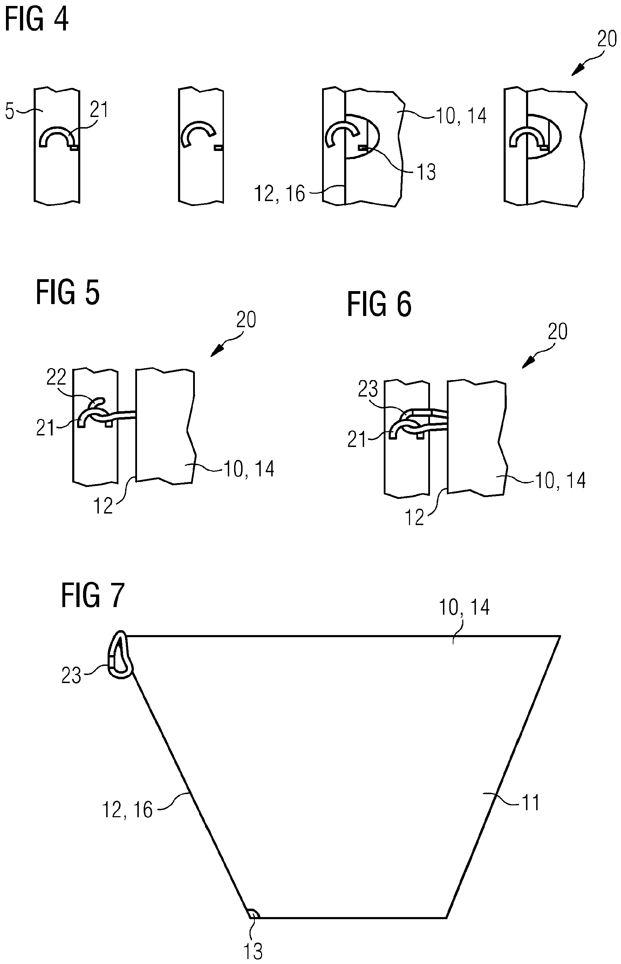

Figure 4 shows the attachment of a drag device 10 to a blade 5 by means of a ring 21 of the blade 5 and a wire rope 16 of the frame 12 of the drag device 10. The wire rope 16 can be secured to one ring 21 of the blade 5 by passing the wire rope 16 through the ring 21. For this, the ring 21 can be opened so that the wire rope 16 passes through the inner part of the ring 21 and then closed to lock the wire rope 16 at the inner part of the ring 21. The planar surface 11 comprises an opening 13 to allow the ring 21 to close through the opening 13, thereby securing the drag device 10 to the blade 5.

Figure 5 shows the attachment of a drag device 10 to a blade 5 by means of a ring 21 of the blade 5 and a hook 22 of the drag device 10. For the attachment, the hook 22 is inserted in the ring 21. Through the tension of the planar surface 11 of the drag device 10, the hook 22 will not detach from the ring 21. To ensure that the hook 22 does not detach, the opening of the hook 22 can be designed just wide enough to be able to insert the hook 22 in the ring 21.

Figure 6 shows the attachment of a drag device 10 to a blade 5 by means of a ring 21 of the blade 5 and a carabiner 23 of the drag device 10. The carabiner 23 comprises a gate member which can be opened by pressing or turning it, which securely attaches the drag device 10 to the blade 5.

Figure 7 shows a drag device 10 comprising a frame 12, a planar surface 11, a carabiner 23 and an opening 13. The drag device 10 is a sail 14. The frame 12 comprises a wire rope 16. This kind of drag device 10 can be attached to a blade 5 as seen in Figures 3, 4 and 6.

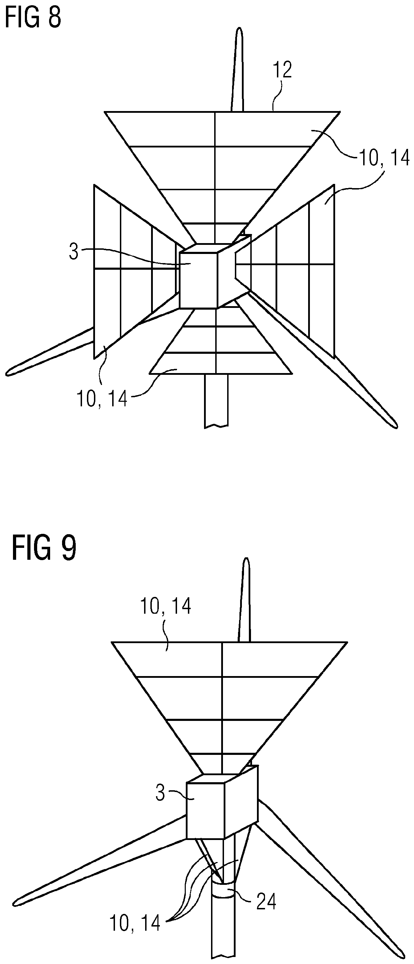

Figure 8 shows a plurality of drag devices 10 attached to the nacelle 3. The drag devices 10 are attached to the lateral surfaces of the nacelle 3 to increase the aerodynamic damping of the wind turbine. The planar surface 11 extends in a direction perpendicular to the longitudinal axis of the nacelle 3. The frame 12 comprises an internal structure extending through the planar surface 11 to increase the structural stability of the drag devices 10. This internal structure can be made of stiff elements such as bars.

Figure 9 shows a plurality of drag devices 10 attached to the nacelle 3, wherein some drag devices 10 are attached to the tower 2 as well. One drag device 10 is attached to the top of the nacelle 3 in a similar way as shown in Figure 8. Further drag devices 10 are attached to both the lower part of the nacelle 3 and to the tower 2 by means of a rotating element 24 to allow for yawing of the nacelle 3. This rotating element 24 is a ring around the tower 2.

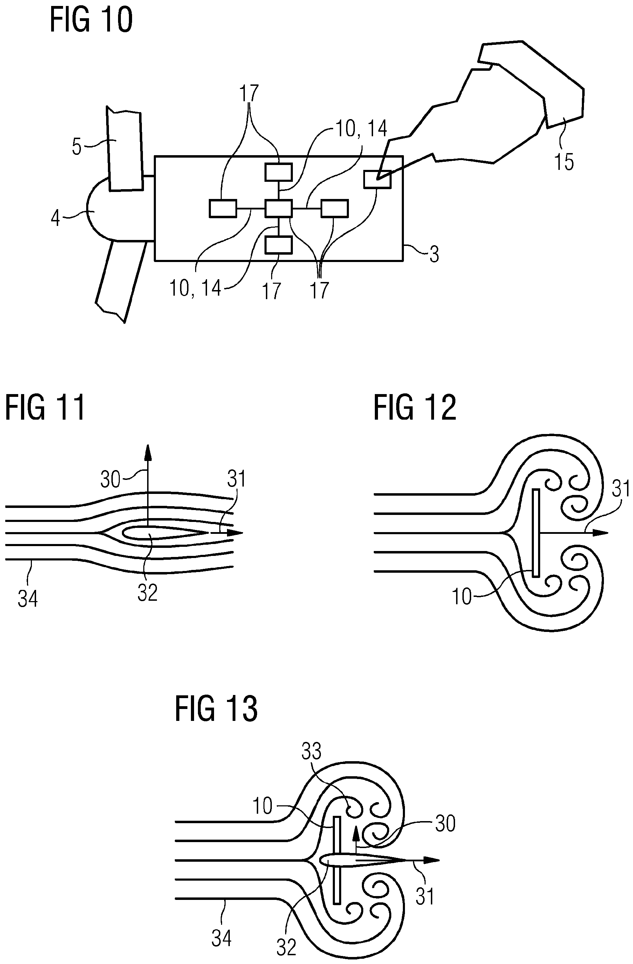

Figure 10 shows a top view of a nacelle 3 comprising a plurality of drag devices 10. The planar surface 11 of some drag devices 10 extends in a direction perpendicular to the longitudinal axis of the nacelle 3. The planar surface 11 of other drag devices 10 extends in a direction parallel to the longitudinal axis of the nacelle 3.

Figures 11 to 13 show the aerodynamic effects of using a drag device 10 on an airfoil 32. Usually, the shape of the airfoil, in the case of wind turbines 1 the shape of the blade 5, determines the amount of lift force 30 and drag force 31 acting on the body when an air flow 34 flows around the body.

In Figure 11, the airfoil has a simplified NACA-like profile. The lift force 30 occurs because the moving fluid, in this case the air flow 34, is turned around the airfoil 32 in a laminar flow. This results in a low pressure zone above the airfoil 32 and a high pressure zone below the airfoil 32, resulting in the lift force 30. Additionally, a drag force 31 smaller than the lift force 30 acts on the airfoil 32 due to air resistance of the airfoil 32.

The drag force 31 is dependent on the effective area of the airfoil facing directly into the air flow 34. Hence, as seen in Figure 12, a drag device 10 with a planar surface 11 extending perpendicular to the air flow 44 direction has a very high drag coefficient and experiences a high drag force 31. As the air flow 34 separates at the edges of the drag device 10, the air flow 34 cannot turn around the drag device 10. The laminar flow transitions to a turbulent flow and no lift force 30 acts on the body.

By attaching the drag device 10 to an airfoil 32, as seen in Figure 13, the lift force 30 is considerably reduced or disappears due to the effects mentioned above.

### Reference numbers

- 1: Wind turbine
- 2: Tower
- 3: Nacelle
- 4: Hub
- 5: Blade
- 10: Drag device
- 11: Planar surface
- 12: Frame
- 13: Opening
- 14: Sail
- 15: Kite
- 16: Wire rope
- 17: Supporting structure
- 20: Attaching means
- 21: Ring
- 22: Hook
- 23: Carabiner
- 24: Rotating element
- 30: Lift force
- 31: Drag force
- 32: Airfoil
- 33: Separation
- 34: Air flow

## Claims

1. A wind turbine (1) comprising a tower (2), a nacelle (3) arranged at an upper end of the tower (2), a hub (4) connected to the nacelle (3) and a plurality of blades (5) extending from the hub (4), **characterized in that** said wind turbine (1) further comprises a drag device (10) for increasing the drag of the wind turbine (1) in air and/or for increasing the aerodynamic damping, said drag device (10) comprising a planar surface (11) configured to be directed perpendicular to an air flow (34).

2. The wind turbine (1) according to claim 1, **characterized in that** the drag device (10) further comprises a frame (12), which gives structural stability to the drag device (10).

3. The wind turbine (1) according to claim 2, **characterized in that** the frame (12) comprises a wire rope (16).

4. The wind turbine (1) according to any of the preceding claims, **characterized in that** the drag device (10) is attached by an attaching means (20) to ensure that the drag device (10) is not detached (1) and/or that the planar surface (11) is tightened to increase the drag coefficient.

5. The wind turbine (1) according to claim 4, **characterized in that** the attaching means (20) comprises a hook (22) attached to a ring (21).

6. The wind turbine (1) according to claim 4, **characterized in that** the attaching means (20) comprises a carabiner (23) attached to a ring (21).

7. The wind turbine (1) according to any of the preceding claims, **characterized in that** the drag device (10) is attached to the nacelle (3).

8. The wind turbine (1) according to any of the preceding claims, **characterized in that** the drag device (10) is attached to the tower (2).

9. The wind turbine (1) according to claim 8, **characterized in that** a rotating element (24) is mounted on the tower (2) to allow for yawing of the nacelle (3) when the drag device (10) is attached to the tower (2).

10. The wind turbine (1) according to any of the preceding claims, **characterized in that** the planar surface (11) extends in a direction parallel to the longitudinal axis of the nacelle (3).

11. The wind turbine (1) according to claims 1 to 9, **characterized in that** the planar surface (11) extends in a direction perpendicular to the longitudinal axis of the nacelle (3) .

12. The wind turbine (1) according to claims 1 to 9, **characterized in that** the drag device (10) is attached to at least two blades (5), wherein the planar surface (11) extends between the two blades (5).

13. The wind turbine (1) according to claim 12, **characterized in that** one drag device (10) is arranged between each pair of blades (5).

14. The wind turbine (1) according to any of the preceding claims, **characterized in that** the drag device (10) is a sail (14) .

15. The wind turbine (1) according to claims 1 to 13, **characterized in that** the drag device (10) is a kite (15).
